(19) Europäisches Patentamt

European Patent Office

Office européen des brevets

(11) **EP 1 002 776 A1**

(12) **EUROPEAN PATENT APPLICATION**

(43) Date of publication:
**24.05.2000 Bulletin 2000/21**

(51) Int. Cl.⁷: **C04B 35/583**, C04B 35/58, C04B 35/581, B22D 11/06

(21) Application number: **98121935.5**

(22) Date of filing: **19.11.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**VESUVIUS CRUCIBLE COMPANY**
**Wilmington, DE (US)**

(72) Inventors:
• **Guillo, Philippe**
  **75009 Paris (FR)**
• **Hoggard, Dale B.**
  **15205 Pittsburgh, PY (US)**

(74) Representative: **Debled, Thierry**
**Vesuvius Group S.A.**
**Intellectual Property Department**
**Rue de Douvrain, 17**
**7011 Ghlin (BE)**

(54) **Composite material**

(57)     The present invention provides a composite pressure-sintered material comprising a continuous phase of hexagonal boron nitride and, dispersed therein, one or more additional nitrides selected from the group consisting of silicon, aluminium, titanium or zirconium nitrides, wherein said additional nitrides can contain up to 35 % by weight of oxygen introduced under the form of one or more stable metal oxides.

It has been observed that this material possesses a low thermal expansion coefficient and therefore reveals good thermal shock resistance. Another characteristic of this material is its low wettability by molten steel which is thus responsible for excellent chemical resistance to liquid metal.

**EP 1 002 776 A1**

**Description**

The present invention relates to a new composite material and more particularly to a pressure-sintered polycrystalline material comprising hexagonal boron nitride and additional nitrides. In a further aspect, this invention relates to a composite material, which is particularly useful for the manufacture of refractory pieces which are submitted to severe corrosion and temperature conditions such as refractory pieces for the metallurgic industry, in particular for the steel industry. In particular, this material is especially suitable for the manufacture of side dam plates for strip casting process.

In this type of continuous casting, called "strip casting" or "twin-roll casting" for the casting of steel strip of approximately from 2 to 10 mm in thickness, the lateral containment of the liquid metal in the casting space defined by the rolls is provided by plates which are applied against the plane extremities of the rolls, called "ends", by a suitable device. These plates are usually termed "sidewall" or "side dam" plates. Their central part intended to be in contact with the liquid metal is made of refractory material, as is, in general, their periphery which rubs frictionally against the rolls, progressively wearing out the side dam plates. It is absolutely essential that these side dam plates be in contact with the rolls in as sealed a manner as possible, since infiltrations of liquid metal into their contact area would have disastrous effects on the dimensional quality of the cast strip. Parts of the strip would then run the risk of separating from the rest of the strip and remain stuck to the rolls. If this sticking were to persist during one complete revolution of the rolls and if the fragments of edges were thus to penetrate into the casting space, this could give rise to serious damage to the surfaces of the rolls and, by way of consequences, to the strip itself. At worst, these infiltrations of metal could reach as far as the outside of the machine, which would dictate stopping the casting immediately.

Such problems may have many causes, among them being the following:

- distortions of the rolls and of the side dam plates, due to mechanical and thermal stresses which they are exposed to, in particular at the very start of casting when a thermal regime is imposed on them;
- progressive (mechanical and chemical) wear of the side dam plates or of the rolls, which is not always uniform over all their contact areas; and
- instantaneous wear of the side dam plates caused by the passage of an infiltration of solidified metal.

There exists thus a need for a material which would combine resistance to mechanical and thermal stresses and have an excellent resistance against chemical or mechanical wear.

A pressure-sintered polycrystalline mixed material is already known from USP 4,885,264. This document discloses materials with a base of boron nitride, oxides and carbides in which the hexagonal boron nitride fraction is from about 30 to about 85% by weight The oxide fraction is selected from the group comprising zirconium oxide and magnesium oxide and is from about 10 to about 50% by weight. The carbide fraction is selected from the group comprising silicon carbide, titanium carbide and zirconium carbide and is from about 5 to about 20% by weight. This material has a density higher than 94% of the theoretically possible density (based on the boron nitride/oxide/carbide mixture). According to USP 4,885,264, this material is resistant to liquid metals, wear resistant and thermal shock resistant and therefore, suitable for use as detachment or break rings in the horizontal continuous casting of steel and non-ferrous metals.

However, it has been observed that, mainly due to a high thermal expansion coefficient, this material does not exhibit sufficient thermal shock resistance. The chemical resistance to liquid metal also needs to be improved.

There exists thus a need for a material which would combine resistance to mechanical and thermal stresses and have an excellent resistance against chemical or mechanical wear and especially, which would have an excellent chemical resistance to liquid metal.

According to the invention, one or more of these needs are achieved with a composite pressure-sintered material comprising a continuous phase of hexagonal boron nitride and, dispersed therein, one or more additional nitrides selected from the group consisting of silicon, aluminium, titanium or zirconium nitrides, wherein said additional nitrides can contain up to 35 % by weight of oxygen introduced under the form of one or more stable metal oxides.

It has been observed that this material possesses a relatively low thermal expansion coefficient and therefore exhibits good thermal shock resistance. Another characteristic of this material is its low wettability by molten steel which is thus responsible for improved resistance to liquid metal and reduces the occurrence of steel solidification thereon.

The crystalline structure of hexagonal boron nitride is essentially constituted of planes which are supposed to play a role in the prevention of cracks propagation. Therefore, the composite material must contain a continuous phase of hexagonal boron nitride. It has been determined that an amount of at least 45 % by weight of hexagonal boron nitride, and more preferably of at least 55 % by weight of hexagonal boron nitride, allows to obtain a continuous phase of boron nitride.

On the other hand, material from hexagonal boron nitride alone is too soft and has unduly low mechanical strength with the result that the material has a high tendency to chipping and wearing. Therefore, the composite material should contain less than 80 % by weight of hexagonal boron nitride and more preferably less than 70 % by weight.

Therefore, the invention also relates to composite pressure-sintered material comprising from 45 to 80 % by weight of hexagonal boron nitride and from 55 to 20 % by weight of one or more additional nitrides selected from the group consisting of silicon, aluminium, titanium or zirconium nitrides, wherein said additional nitrides can contain up to 35 % by weight of oxygen introduced under the form of one or more stable metal oxides.

The best results have been obtained with materials comprising 57.5 % by weight of hexagonal boron nitride.

According to the invention, the composite material comprises also one or more additional nitrides selected from the group consisting of silicon, aluminium, titanium or zirconium nitrides. Advantageously, silicon nitride is used.

According to a preferred embodiment of the invention, the additional nitrides may contain up to 35 % by weight of oxygen introduced under the form of one or more stable metal oxides.

Preferably, the additional nitrides contain at least 2.5 % by weight of oxygen.

It is necessary that the selected metal oxides, if any, are able to form a solid solution into said additional nitrides. This is generally the case when the atomic weight of the heavier metal atom of said stable metal oxides is not substantially higher than the atomic weight of the heavier metal atom of said additional nitrides.

Suitable stable metal oxides comprise, but are not limited to, oxides of aluminium, titanium, zirconium, silicon or magnesium or mixtures thereof. Among these, aluminium oxide is preferred.

In a particular embodiment of the invention, use is made of Sialon as additional nitride containing oxygen. Sialon is a well-known material and, as the name implies is a material composed of Si-Al-O-N and may be described as a solid solution of alumina in silicon nitride. The normal chemical formula of Sialon is given by $Si_{6-z}Al_zO_zN_{8-z}$, wherein z is comprised between 0 and about 4.5. According to the invention, z is preferably comprised between 1 and 4.5 and more preferably between 2 and 3.

It is to be understood that the composite material may also comprise conventional additives such as yttrium, magnesium, calcium and/or cerium oxides which present melting phases at high temperature and which are preferred over boron oxide. These additives are added in minor amounts not exceeding 5 % by weight of the mixture hexagonal boron nitride/additional nitrides.

As starting materials for the production of the composite material of the invention, use is advantageously made of hexagonal boron nitride powder having an oxygen content of from about 2 to about 8% by weight and a specific surface of from about 5 to about 30 $m^2$/g (measured by the BET method) and of the additional nitrides and metal oxide powder, respectively, with a purity of at least about 95% in each case.

These powders may be homogeneously mixed in a manner known, per se, in a standard mixing apparatus optionally with a temporary binder being used at the same time and then pressure-sintered until the density of at least about 94% of the theoretical density is achieved. In this process, the mixtures may be hot-pressed in graphite moulds, with axial pressure application at temperatures of from about 1500°C to about 1800°C, and preferably from about 1650°C to about 1750°C, with a die pressure of from about 10 to about 40 MPa, and preferably from about 15 to about 35 MPa. Alternatively, the mixtures may also be isostatically hot-pressed in a vacuum tight closed case at a temperature of from about 1400°C to about 1700°C, and preferably from about 1500°C to about 1600°C under a pressure of from about 100 to about 300 MPa, and preferably from about 100 to about 200 MPa in a high-pressure autoclave using an inert gas as a pressure transfer medium. Suitable shaped parts with the required dimensions are machined out of the ingots thus obtained.

The new composite material according to the invention finds its main application as side dam plates for strip casting process, but also in other applications where its exceptional resistance to mechanical and thermal stresses and its excellent resistance against chemical or mechanical wear are of importance; for example as sliding plate, in a sliding gate for a metallurgical vessel such as a tundish or a ladle.

The subject of the invention is explained in more details in the following examples:

**Examples.**

The following powder mixtures have been prepared:

In the examples 1 to 5 according to the invention, the additional nitride is silicon nitride containing oxygen which has been introduced under the form of alumina and of magnesia. In these examples use has been made of a Sialon with z=2 obtained by known methods such as solid reaction of silicon nitride with alumina or by carboreduction under ammoniac atmosphere of a mixture of silicon and aluminium oxides. Three percent (by weight of Sialon) of MgO is added to the Sialon. This leads to oxygen content of 11.45 % for the additional nitrides.

In the examples 3 and 4, 1 % (by weight of Sialon) of yttrium oxide ($Y_2O_3$) was also added.

TABLE 1

| Example | Boron nitride (% by weight) | Additional nitride (% by weight) | MgO (% by weight of Sialon) | $Y_2O_3$ (% by weight of Sialon) |
|---|---|---|---|---|
| 1 | 50 | 50 | 3 | 0 |
| 2 | 65 | 35 | 3 | 0 |
| 3 | 50 | 50 | 3 | 1 |
| 4 | 65 | 35 | 3 | 1 |
| 5 | 57.5 | 42.5 | 3 | 0 |

By way of comparison, a powder mixture comprising 50 % by weight of hexagonal boron nitride, 40 % by weight of zirconia ($ZrO_2$) and 10 % by weight of silicon carbide was also prepared (example C1).

The powder mixtures prepared at examples 1 to 5 and C1 were hot pressed at a temperature of 1650°C with a die pressure of 20 MPa.

Table 2 shows the results achieved using the materials of example 1 to 5 and C1.

TABLE 2

| Example | Thermal expansion coefficient ($10^{-6}K^{-1}$) | R factor ($\Delta T$ necessary to initiate a crack) (°C) | Wettability (vs. stainless steel at 1550°C) |
|---|---|---|---|
| 1 | 2.5 | 488 | 130 to 150° |
| 2 | 2.55 | 879 | - |
| 3 | 1.75 | 915 | - |
| 4 | 2.0 | 529 | - |
| 5 | 1.85 | 596 | 130 to 150° |
| C1 | 3.3 | 337 | 100 to 110° |

It appears clearly from the comparison between examples 1 to 5 and example C1 that the material according to the invention exhibits a very low coefficient of thermal expansion and has then an excellent resistance to thermal stresses. This appears also from the values measured for the R factor (thermal shock resistance calculated by the formula:

$$R = \frac{\sigma(1-\nu)}{\varepsilon\alpha}$$

Wherein $\sigma$ represents the flexural modulus (MOR), $\nu$ represents the Poisson's ratio, $\varepsilon$ represents the Young's modulus and $\alpha$ represents the thermal expansion coefficient) showing that the material according to the invention may resist to 2 to 3 times the $\Delta T$ which is sufficient to cause crack in the material of the art. The values observed for the wettability show that the material according to the invention is poorly wettable by molten steel, this may also be observed in placing a drop of liquid stainless steel at 1550°C under an atmosphere of argon on a sample of the material. After removal of the steel, an interaction zone of 250 μm depth is observed with the material of example C1, while in the case of the material according to the invention (example 5), an interaction zone of only 50 μm may be observed.

**Claims**

1.  Composite pressure-sintered material comprising a continuous phase of hexagonal boron nitride and, dispersed therein, one or more additional nitrides selected from the group consisting of silicon, aluminium, titanium or zirconium nitrides, wherein said additional nitrides can contain up to 35 % by weight of oxygen introduced under the form of one or more stable metal oxides.

2. Composite pressure-sintered material according to claim 1, **characterised in that** it comprises from 45 to 80 % by weight of hexagonal boron nitride and from 55 to 20 % by weight of said additional nitrides.

3. Composite pressure-sintered material comprising from 45 to 80 % by weight of hexagonal boron nitride and from 55 to 20 % by weight of one or more additional nitrides selected from the group consisting of silicon, aluminium, titanium or zirconium nitrides, wherein said additional nitrides can contain up to 35 % by weight of oxygen introduced under the form of one or more stable metal oxides.

4. Composite pressure sintered material according to anyone of claims 1 to 3, **characterised in that** said metal oxides are able to form a solid solution into said additional nitrides

5. Composite pressure sintered material according to claim 4, **characterised in that** the atomic weight of the heavier metal atom of said stable metal oxides is not substantially higher than the atomic weight of the heavier metal atom of said additional nitrides.

6. Composite material according to anyone of claims 2 to 5, **characterised in that** its hexagonal boron nitride contents is from 55 to 70% by weight

7. Composite material according to anyone of claims 1 to 6, **characterised in that**, said additional nitrides comprise silicon nitride.

8. Composite material according to anyone of claims 1 to 7, **characterised in that** said additional nitrides comprise a positive amount of oxygen.

9. Composite material according to claim 8, **characterised in that** said additional nitrides comprise at least 2.5 % of oxygen.

10. Composite material according to anyone of claims 1 to 9, **characterised in that** the metal oxides are selected from aluminium, titanium, zirconium, silicon or magnesium oxides or mixtures thereof.

11. Composite material according to claim 10, **characterised in that** the metal oxides comprise aluminium oxide.

12. Composite material according to anyone of claims 1 to 11, **characterised in that** the additional nitrides comprise silicon nitride wherein a positive amount of oxygen has been introduced under the form of aluminium oxide.

13. Composite material according to claim 12, **characterised in that** the additional nitrides are essentially constituted of Sialon ($Si_{6-z}Al_zO_zN_{8-z}$) with z being comprised between 1 and 4.5.

14. Composite material according to claim 13, **characterised in that** z is comprised between 2 and 3.

15. Side dam plates comprising a refractory material according to anyone of claims 1 to 14.

# EUROPEAN SEARCH REPORT

Application Number

EP 98 12 1935

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 396 779 A (KABUSHIKI KAISHA KOURANSHA) 14 November 1990 <br> * page 4, line 6 - page 5, line 6; claims 1-4 * <br> * page 15 * | 1-15 | C04B35/583 <br> C04B35/58 <br> C04B35/581 <br> B22D11/06 |
| X | CHEMICAL ABSTRACTS, vol. 104, no. 10, 10 March 1986 <br> Columbus, Ohio, US; <br> abstract no. 73722, <br> K. KOBAYASHI ET AL.: "Brake rings for horizontal continuous casting machines" <br> XP002099383 <br> * abstract * <br> & JP 60 145963 A (AGENCY OF INDUSTRIAL SCIENCES AND TECHNOLOGY, JAPAN) 1 August 1985 | 1,4,5, 7-15 | |
| X | EP 0 447 940 A (ISHIKAWAJIMA-HARIMA JUKOGYO K.K. ET AL.) 25 September 1991 <br> * claims 1-3,6,9; table 1 * | 1,15 | |
| X | US 5 457 075 A (H. FUKUSHIMA ET AL.) 10 October 1995 <br> * claims 1-11; table 6 * | 1-6, 8-11,15 | TECHNICAL FIELDS SEARCHED (Int.Cl.6) <br><br> C04B <br> B22D |
| X | CHEMICAL ABSTRACTS, vol. 112, no. 16, 16 April 1990 <br> Columbus, Ohio, US; <br> abstract no. 144565, <br> I. NASU ET AL.: "Manufacture of refractories for blast furnaces" <br> XP002099384 <br> * abstract * <br> & JP 01 246178 A (DENKI KAGAKU KOGYO K.K., JAPAN) 2 October 1989 | 1-3,6,15 | |

-/--

The present search report has been drawn up for all claims

| Place of search | Date of completion of the search | Examiner |
|---|---|---|
| THE HAGUE | 9 April 1999 | Hauck, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 98 12 1935

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 22 36 437 A (ELEKTROSCHMELZWERK KEMPTEN GMBH) 7 February 1974 * claims 1,2; tables 1,2 * | 1-3,15 | |
| | | | **TECHNICAL FIELDS SEARCHED (Int.Cl.6)** |

The present search report has been drawn up for all claims

| Place of search | Date of completion of the search | Examiner |
|---|---|---|
| THE HAGUE | 9 April 1999 | Hauck, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 12 1935

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-1999

| Patent document cited in search report | | Publication date | Patent family member(s) | | Publication date |
|---|---|---|---|---|---|
| EP 396779 | A | 14-11-1990 | DE | 68923272 D | 03-08-1995 |
| | | | DE | 68923272 T | 09-11-1995 |
| | | | KR | 134026 B | 18-04-1998 |
| | | | AT | 124383 T | 15-07-1995 |
| | | | WO | 9005122 A | 17-05-1990 |
| | | | JP | 3218976 A | 26-09-1991 |
| | | | US | 5389587 A | 14-02-1995 |
| EP 447940 | A | 25-09-1991 | JP | 3264145 A | 25-11-1991 |
| | | | AU | 637206 B | 20-05-1993 |
| | | | AU | 7286691 A | 19-09-1991 |
| | | | DE | 69103791 D | 13-10-1994 |
| | | | DE | 69103791 T | 11-05-1995 |
| | | | US | 5227347 A | 13-07-1993 |
| US 5457075 | A | 10-10-1995 | JP | 6321641 A | 22-11-1994 |
| | | | JP | 7277830 A | 24-10-1995 |
| DE 2236437 | A | 07-02-1974 | AT | 344586 B | 25-07-1978 |
| | | | AT | 651973 A | 15-11-1977 |
| | | | BE | 802774 A | 25-01-1974 |
| | | | CA | 983057 A | 03-02-1976 |
| | | | CH | 586168 A | 31-03-1977 |
| | | | FR | 2193796 A | 22-02-1974 |
| | | | GB | 1430175 A | 31-03-1976 |
| | | | JP | 901775 C | 15-03-1978 |
| | | | JP | 49059809 A | 11-06-1974 |
| | | | JP | 52030163 B | 06-08-1977 |
| | | | NL | 7310241 A | 29-01-1974 |
| | | | SE | 392884 B | 25-04-1977 |
| | | | US | 3854967 A | 17-12-1974 |

EPO FORM P0459

For more details about this annex : see Official Journal of the European Patent Office. No. 12/82